# EUROPÄISCHE PATENTSCHRIFT

(11) **EP 0 453 806 B1**
(45) Veröffentlichungstag und Bekanntmachung des Hinweises auf die Patenterteilung: **25.08.1993**
(21) Anmeldenummer: 91104950.0
(22) Anmeldetag: 28.03.1991
(51) Int. Cl.: B65G 57/03

(54) **Einrichtung zum Abstapeln von aus aufgeteilten, plattenförmigen Einzelwerkstücken oder Plattenpaketen hergestellten Einzelformaten**
Installation for staking of separate individual slab-shaped work pieces or packs of such workpieces
Installation pour empiler des pièces constituées d'éléments plats séparés ou de paquets desdits éléments plats

(30) Priorität: 23.04.1990 DE 4012840
(43) Veröffentlichungstag der Anmeldung: 30.10.1991
(60) Teilanmeldung: 93101055.7
(73) Patentinhaber: Jenkner, Erwin, D-75391 Gechingen (DE)
(72) Erfinder: Jenkner, Erwin, D-75391 Gechingen (DE)
(74) Vertreter: Becker, Maria, Dipl.-Phys.

(56) Entgegenhaltungen:
- AT-B- 333 663
- AT-B- 343 538
- AT-B- 351 445

## Beschreibung

Die Erfindung betrifft eine Einrichtung zum Abstapeln von aus aufgeteilten, plattenförmigen Einzelwerkstücken oder Plattenpaketen hergestellten Einzelformaten, mit den Merkmalen des Oberbegriffs von Patentanspruch 1.

Eine derartige Einrichtung ist, was druckschriftlich allerdings nicht belegbar ist, bekannt. Dem oberhalb der Stapelstationen verfahrbaren, programmgesteuerten Abstapelwagen sind entweder ein eine Plattenaufteilanlage verlassendes Aufteilbild (bunt aufgeteilte Werkstückplatte oder entsprechend aufgeteiltes Plattenpaket) als Ganzes oder jeweils nur ein quer aufgeteilter Streifen eines solchen Aufteilbildes entweder als Ganzes oder dessen Einzelformate zuführbar.

Streifen, bzw. die ihn bildenden Einzelformate, oder das gesamte Aufteilbild werden anschliessend mittels des Abstapelwagens zu einer oder mehreren Stapelstationen zum Abstapeln befördert.

Im ersteren Falle wird der aus mehreren Einzelformaten bestehende Streifen oder dessen vereinzelte Einzelformate einer programmgemäss ausgewählten Stapelstation zugeführt, worauf die Abstapelvorrichtung in Funktion tritt und diesen bzw. dessen Einzelformate dort ablegt.

Im zweiten Fall tritt die Abstapelvorrichtung während einer Transportbewegung des Abstapelwagens in mehrere, ausgewählte Stapelstationen in Funktion, wobei in nacheinander angefahrenen Stapelstationen jeweils einer der quer aufgeteilten Streifen des aufgenommenen Aufteilbildes vom Abstapelwagen abgestapelt wird.

Zu diesem Zweck weist die Abstapelvorrichtung am Abstapelwagen eine ansteuerbare Abstreifleiste auf, die zur Einzelablage von quer aufgeteilten Streifen oder im Falle eines aufliegenden Aufteilbildes dasselbe um die Breite solcher Streifen entgegen der Bewegungsrichtung des Abstapelwagens verschiebt. Demgemäss wird dann an den entsprechenden Stapelstationen jeweils nur einer der Streifen eines Aufteilbildes vom Abstapelwagen heruntergeschoben.

Diese Einrichtung arbeitet zeitaufwendig, so dass ein kontinuierlicher Durchlauf von aufzuteilenden Einzelplatten oder Plattenpaketen durch Plattenaufteilanlagen nur in eingeschränktem Umfang möglich ist.

Bei einer bekannten Vorrichtung zum Transportieren und Abstapeln von plattenförmigen Material (AT-B-351 445) ist ein Transportwagen vorgesehen, dem von einer Aufteilsäge über einen Sammeltisch einzelne aufgeteilte Platten oder Plattenstapel, Formatstreifen oder ein gesamtes Aufteilbild zuführbar ist. Der Transportwagen ist entlang einer Reihe von nebeneinander angeordneten Abstapelplätzen hin und her verfahrbar, um die Einzelformate der Streifen oder Aufteilbilder an den einzelnen Plätzen abstapeln zu können. Die Übergabe der Einzelformate vom Transportwagen auf die Abstapelplätze erfolgt dabei mittels einer entsprechenden am Transportwagen vorgesehenen Übergabevorrichtung.

Eine bekannte Plattenaufteil- und Sortieranlage (AT-B-343538) weist eine Reihe von Stapeleinrichtungen auf, denen ein Transportwagen zugeordnet ist, der entlang den Stapeleinrichtungen verfahrbar ist. Dem Quertransportwagen werden dabei die Einzelformate über eine Auflageebene und einen Verteiltisch an der Aufteilanlage zugeführt.

Weiter ist zur Aufnahme und Weitergabe bzw. zum Abstapeln plattenförmiger Werkstücke ein schwenkbarer Stapelwagen bekannt (AT-B-333 663), der ein rechenförmiges Tragteil umfasst, das zwischen einer Übernahmestellung und einer Abgabestellung für plattenförmige Werkstücke hin und her verfahrbar ist, wobei das Tragteil in seiner Abgabe- oder Abstapelstellung mit einem Abstreifer zusammenwirkt.

Der Erfindung liegt die Aufgabe zugrunde, eine Einrichtung in einer Ausbildung gemäss dem Oberbegriff von Patentanspruch 1 so zu verbessern, dass sie mit hoher Taktleistung arbeitet und damit einen kontinuierlichen Plattendurchlauf durch eine vorgeschaltete Plattenaufteilanlage ermöglicht. Ausserdem sollen aus dem Aufteilbild einzelner Werkstückplatten bzw. Plattenpakete Einzelformate in unterschiedlichen Stapelstationen kurzfristig abgestapelt werden können, so dass bei der Verarbeitung einzelner Werkstückplatten bzw. Plattenpakete nach dem gleichen Schnittplan aus gleichen Einzelformaten gebildete Plattenstapel entstehen. Dabei soll es möglich sein, in einer Stapelstation, sofern es sich um entsprechend klein bemessene Einzelformate handelt, auch zwei oder ggf. mehrere Einzelstapel verschiedener, gleichformatiger Einzelformate gleichzeitig zu bilden.

Diese Aufgabe wird erfindungsgemäss durch die kennzeichnenden Merkmale des Patentanspruches 1 gelöst.

Die erfindungsgemäss vorgesehenen Abstapelwagen bewegen sich entlang einer endlosen Führungsbahn, so dass solche in schneller Folge zur Übernahme eines oder ggf. mehrerer, quer aufgeteilter Platten- bzw. Paketstreifen bereitzustellen sind, wobei diese stets nur in einer Richtung gesteuert werden.

Beispielsweise werden der Einrichtung zugelieferte Einzelformate von einem der Abstapelwagen aufgenommen und programmgesteuert stets in der gleichen Stapelstation abgelegt. Währenddessen kann bereits ein weiterer Abstapelwagen ein weiteres Einzelformat übernehmen und weitertransportieren. Die Taktzeiten der Einrichtung verkürzen sich deshalb umso mehr, je mehr Abstapelwagen eingesetzt werden. Es empfiehlt sich deshalb, die Anzahl der Abstapelwagen zumindest so gross zu wählen wie die Anzahl der vorhandenen Stapelstationen.

Die erfindungsgemässe Einrichtung ist vorteilhaft mit einer eine Längs- und eine Quersäge aufweisenden Plattenaufteilanlage verkettet. In diesem Falle ist zwischen beiden eine Vereinzelungsvorrichtung zwischenzuschalten, um die aneinander anliegenden Einzelformate anfallender, quer aufgeteilter Streifen eines Aufteilbildes vor ihrer Übergabe in die erfindungsgemässe Einrichtung in Streifenlängsrichtung zu vereinzeln.

Im Falle schmaler Streifen können auch zwei oder ggf. mehrere Streifen eines Aufteilbildes, nebeneinander liegend, gleichzeitig vereinzelt werden, derart, dass dann, wie oben bereits erläutert, jeweils zwei oder mehrere Einzelformate nebeneinanderliegend einem Abstapelwagen gleichzeitig zugeführt und demgemäss auch in den zur Stapelung ausgewählten Stapelstationen gemeinsam nebeneinanderliegend abgestapelt werden.

Die Führungsbahn kann gemäss den Patentansprüchen 2 oder 3 verlaufen. Im letzteren Falle ergibt sich eine vorteilhafte Konstruktion nach Patentanspruch 4.

Vorteilhafte Ausgestaltungen der Erfindung sind Gegenstand von Unteransprüchen.

In der Zeichnung ist, stark schematisiert, ein Ausführungsbeispiel der Erfindung dargestellt. Es zeigen:
- Fig. 1: eine Draufsicht der Einrichtung,
- Fig. 2: eine Ansicht der Einrichtung, in Richtung des Pfeiles A der Fig. 1 gesehen,
- Fig. 3: eine Seitenansicht eines Abstapelwagens,
- Fig. 4: eine Draufsicht des Abstapelwagens,
- Fig. 5: einen Längsschnitt einer der beiden Hubvorrichtungen der die Abstapelwagen führenden Führungsbahn,
- Fig. 6: eine Draufsicht der Hubvorrichtung gemäss Fig. 5,
- Fig. 7: einen Teilschnitt entlang der Linie 7-7 der Fig. 5.

Die Abstapeleinrichtung weist beispielsweise Stapelstationen I - VII auf. Vor der Stapelstation I ist eine Eingabestation 10 vorgeschaltet, der beispielsweise über eine Vereinzelungsvorrichtung 12 Einzelformate eines vereinzelten, quer aufgeteilten Plattenlängsstreifens zugeführt werden.

Jeder Stapelstation I - VII sowie der Eingabestation 10 ist eine Übernahmevorrichtung I' - VII' zugeordnet, die beispielsweise als Rollenförderer ausgebildet sind. Die Reihe der sich aneinander anschliessenden Stapelstationen I - VII erstreckt sich vorzugsweise senkrecht zur Förderrichtung der Vereinzelungsvorrichtung 12.

Jede Stapelstation I - VII ist mit einem Hubtisch 14 ausgestattet, der sich nach jeder erfolgten Übergabe eines Einzelformates oder eines Paketstapels 16 (Einzelformat eines Plattenpakets) um einen der Höhe dieser Teile entsprechenden Betrag absenkt, damit das jeweils oben liegende Einzelformat der abgelegten bzw. gebildeten Stapel sich in allen Stapelstationen I - VII in der gleichen Ebene zur Übernahme eines weiteren Einzelformates bzw. Paketstapels befindet.

Oberhalb der Stapelstationen I - VII ist eine Transportvorrichtung 18 angeordnet, mit deren Hilfe programmgesteuert in den einzelnen Stapelstationen I - VII abgestapelt wird. Sie weist eine Anzahl von Abstapelwagen 20 auf, die vorzugsweise um drei grösser ist als die Anzahl der Stapelstationen I-VII.

Die Abstapelwagen 20 bewegen sich in zwei übereinander liegenden Ebenen a-a sowie b-b längs der Reihe von Stapelstationen I - VII dergestalt, dass sie nach Passieren der letzten Stapelstation VII in einer Hubstation 22 aus ihrer Förderebene a-a in die Rücklaufebene b-b angehoben werden. Haben sie in dieser Ebene b-b die Eingabestation 10 passiert, laufen sie in eine weitere Hubstation 24 ein, in der sie, bevor sie wieder der Eingabestation 10 zugeführt werden, in die Förderebene a-a abgesenkt werden.

Jeder Stapelstation I - VII ist eine als Ganzes mit 26 bezeichnete Abstapelvorrichtung zugeordnet, die über ein mit dem Aufteilprogramm einer vorgeschalteten Plattenaufteilanlage abgestimmtes Steuerprogramm derart ansteuerbar ist, dass Einzelformate oder Paketstapel, die mittels eines Abstapelwagens 20 herangefördert werden, in der zu deren Stapelung vorgesehenen Stapelstation vom Abstapelwagen 20 heruntergeschoben werden.

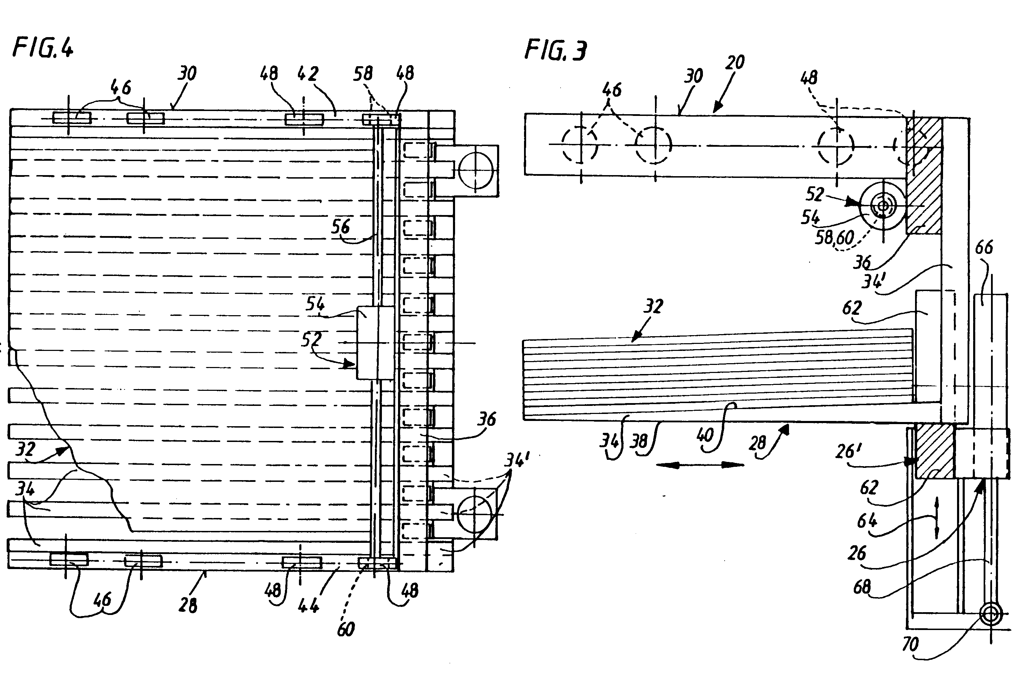

Wie Fig. 3 zeigt, sind die Abstapelwagen 20 in Seitenansicht U-förmig ausgebildet, wobei sich deren U-Schenkel 28 und 30 horizontal erstrecken. Der ein Einzelformat oder, wie Fig. 3 zeigt, ein Paketstapel 32 aufnehmende U-Schenkel 28 bildet hierbei einen Stapelrechen, dessen einzelnen Rechenzinken in Fig. 4 mit 34 bezeichnet sind. Diese sind winkelförmig ausgebildet, wobei deren vertikaler Zinkenabschnitt 34' an einem oberen Querjoch 36 befestigt ist. Während die Unterkante 38 der Zinken 34 im wesentlichen horizontal verläuft, fällt deren Oberkante 40, zwecks eines sich vorteilhafter gestaltenden Abschiebens beispielsweise des Paketstapels 32, in Richtung auf das freie Zinkenende leicht schräg ab.

Das Querjoch 36 trägt an beiden Enden den oberen U-Schenkel 30 der Abstapelwagen 20 bildende Tragschienen 42 und 44, in welchen jeweils zwei Paare von Führungsrollen 46 und 48 frei drehbar gelagert sind.

Jeder Abstapelwagen 20 ist mit einer eigenen Antriebsvorrichtung 52 ausgestattet, die am Querjoch 36 sitzt. Sie weist einen programmgesteuerten Elektromotor 54 auf, durch den eine Antriebswelle 56 antreibbar ist. Diese erstreckt sich jeweils bis in den Bereich der Tragschienen 42 und 44, wobei auf ihren Wellenenden jeweils ein Zahnritzel 58 bzw. 60 drehfest sitzt.

Die den Abstapelwagen 20 in den Stapelstationen I - VII jeweils zugeordnete Abstapelvorrichtung 26 weist einen Abstreifkamm 26' auf, dessen Kammzähne 62, wie durch den Doppelpfeil 64 angedeutet, zwischen den vertikal verlaufenden Zinkenabschnitten 34' der Abstapelwagen 20 aus einer unteren Freigabestellung in eine in Fig. 3 gezeigte, obere Abstreifstellung steuerbar sind. Die Betätigung des Abstreifkammes 26' erfolgt mit Hilfe eines programmabhängig ansteuerbaren Stellgliedes beispielsweise in Form eines doppelt beaufschlagbaren Zylinders 66, dessen Kolbenstange 68 bei 70 gestellfest gelagert ist.

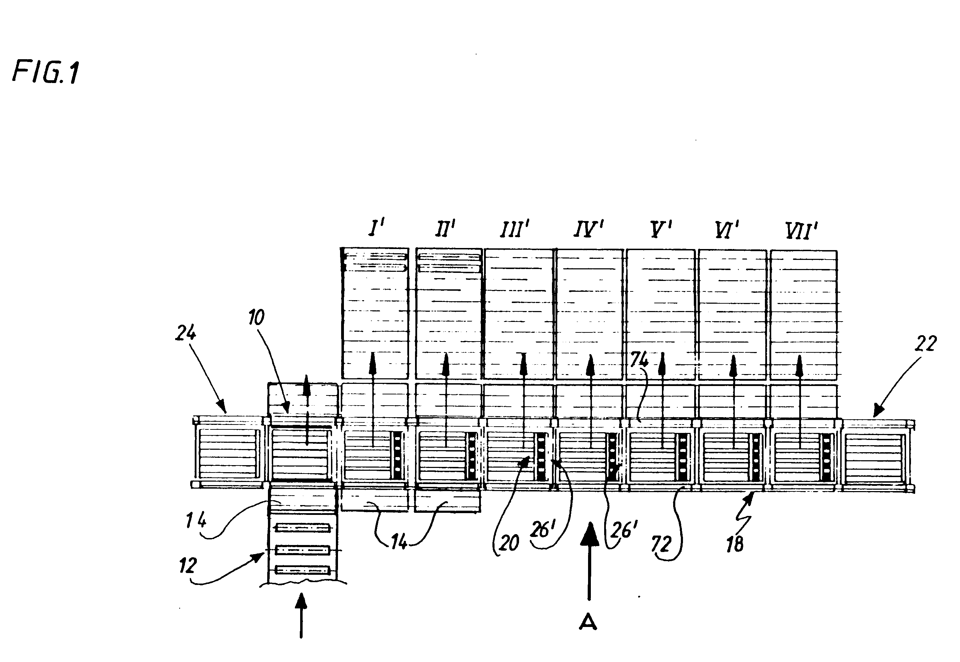

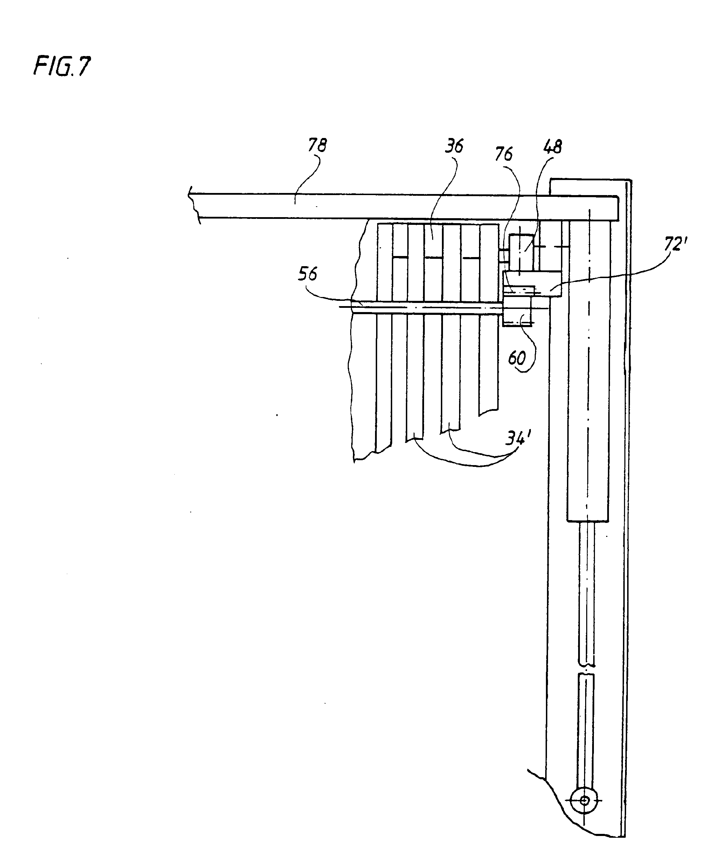

Die Rollenpaare 46, 48 jeder Tragschiene 28, 30 wälzen sich auf seitlichen, horizontalen Führungsschienen 72 und 74 ab (Fig. 1), von denen in Fig. 7 lediglich eine dargestellt ist. An der Unterseite dieser Führungsschienen 72 und 74 sitzt jeweils eine Zahnstange 76, die mit einem der Zahnritzel 58 bzw. 60 in Eingriff ist. Der Antrieb der Abstapelwagen 20 erfolgt deshalb bei Rotation der Antriebswelle 56.

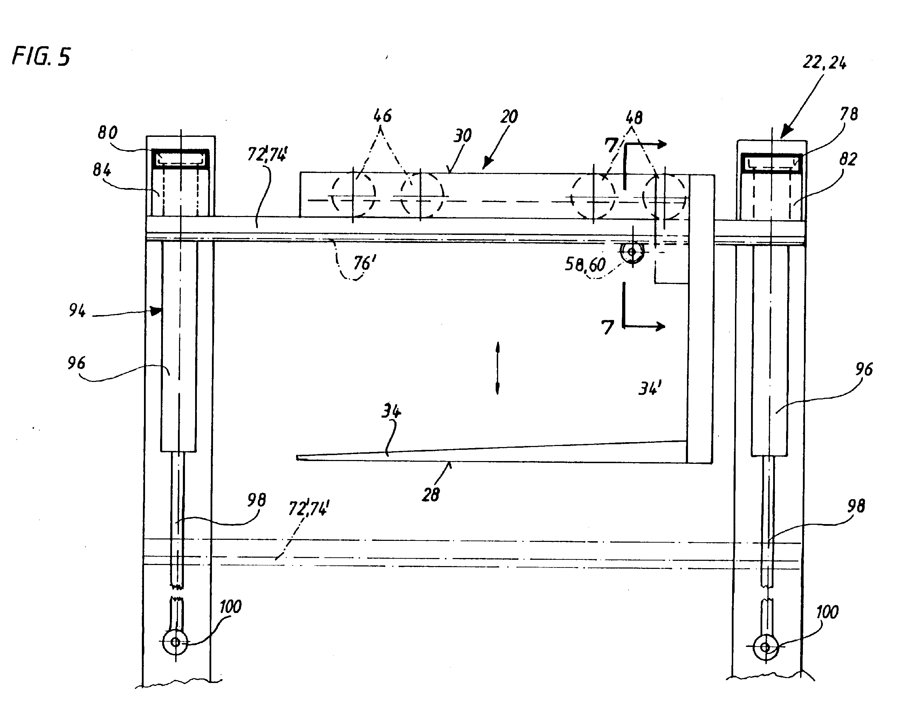

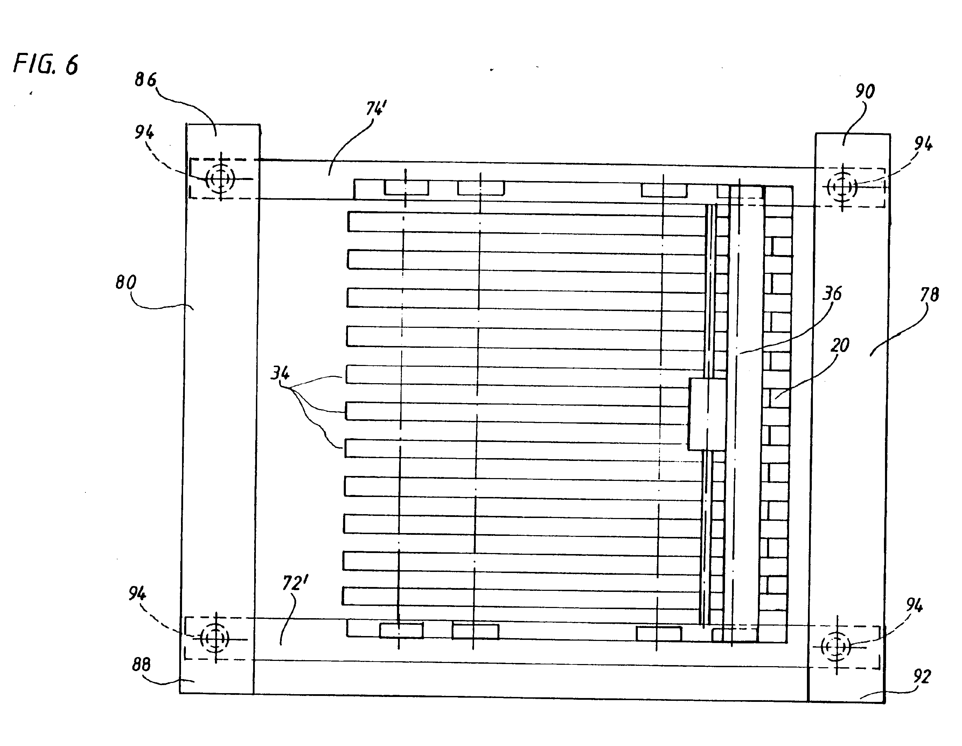

Die beiden Hubstationen 22 und 24 sind konstruktiv gleich ausgebildet. Sie weisen in Verlängerung der horizontalen Führungsschienen 72 und 74 jeweils zwei Führungsschienenabschnitte 72' und 74' auf (Fig. 6), die beide jeweils auch einen Zahnstangenabschnitt 76' tragen (Fig. 5). Die Führungsschienenabschnitte 72' und 74' sind mit ihren Endbereichen an der Unterseite jeweils einer Quertraverse 78 bzw. 80 gehalten, wozu sie an mit diesen verbundenen Distanzkörpern 82 bzw. 84 derart befestigt sind, dass die Abstapelwagen 20 unterhalb jeweils einer dieser Quertraversen 78 bzw. 80 vorbei und in die Hubstation 24 ein- bzw. aus der Hubstation 22 ausfahren können.

Jede Quertraverse 78 bzw. 80 ist in ihren Endbereichen auf zwei, vorzugsweise in Gestellsäulen 86, 88 bzw. 90, 92 untergebrachten Hubvorrichtungen 94 aufgelagert, die vorzugsweise jeweils durch ein doppelbeaufschlagbares Zylinderaggregat gebildet sind, deren Zylinder 96 die Führungsschienenabschnitte 72' und 74' aufnehmen und deren Kolbenstange 98 bei 100 in den Gestellsäulen 86 - 92 schwenkbeweglich abgestützt ist. Die untere Ausgangslage (Förderebene a-a) der Führungsschienenabschnitte 72' und 74' ist in Fig. 5 strichpunktiert angedeutet.

In jeder Hubendstellung schliessen die Führungsschienenabschnitte 72' und 74' und die Zahnstangenabschnitte 76' im wesentlichen fugenfrei an die Führungsschienen 72 und 74 an.

Die Einrichtung arbeitet folgendermassen:
Es sei angenommen, dass die Einzelformate eines Aufteilbildes (nach einem Schnittplan aufgeteilte Werkstückplatte) in der Einrichtung so abgestapelt werden sollen, dass in deren Stapelstationen I - VII jeweils das gleiche Format aufweisende Einzelformate abgestapelt werden.

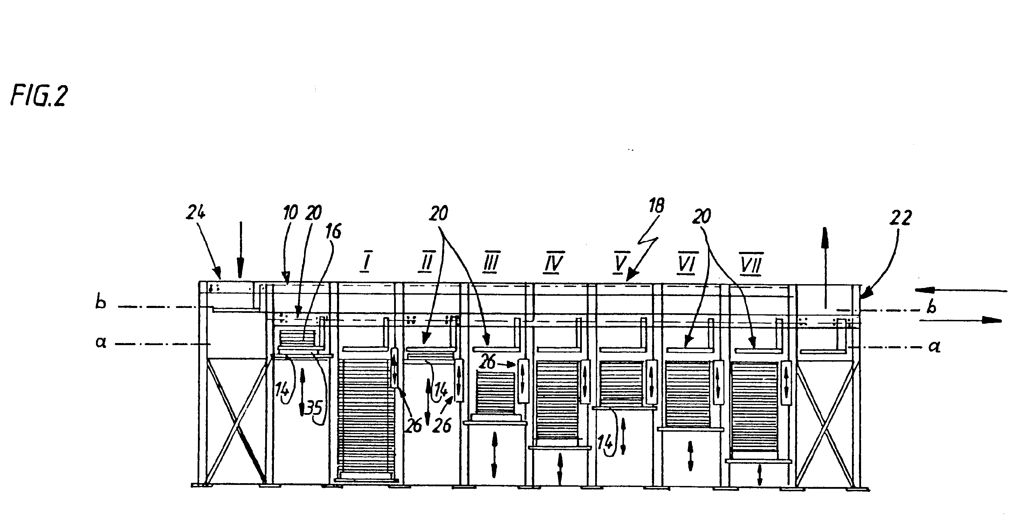

Wie Fig. 2 zeigt, sind beispielsweise sämtliche Stapelstationen I - VII belegt, was bedeutet, dass die betreffende Werkstückplatte in sieben Längsstreifen aufgeteilt worden ist, die ihrerseits zur Herstellung der Einzelformate entsprechend quer aufgeteilt worden sind.

Das Aufteilbild verlässt die betreffende Plattenaufteilanlage so, dass einander benachbarte, quer aufgeteilte Längsstreifen aneinander anliegen. Voraussetzung zur gewünschten Abstapelung von Einzelformaten in jeweils der gleichen Stapelstation ist in diesem Falle, dass die Einzelformate jeweils eines Längsstreifens des Aufteilbildes einzeln der Eingabestation 10 zugeführt werden. Es ist aus diesem Grunde notwendig, zwischen die Eingabestation 10 und die Plattenaufteilanlage, wie bereits erwähnt, die Vereinzelungsvorrichtung 12 zwischenzuschalten (s. Fig. 1).

In der Eingabevorrichtung 10 ist bereits ein Abstapelwagen 20 bereitgestellt, auf den ein ankommendes Einzelformat durch Absenken abgelegt wird. Hierzu ist die Eingabestation 10 beispielsweise mit zwischen die Zinken 34 des Abstapelwagens 20 eingreifenden und an deren Oberseite vorstehenden Friktionsrollen 35 ausgestattet, die abgesenkt werden, sobald sich das Einzelformat in Ablagestellung über den Zinken 34 des Abstapelwagens 20 befindet. Nunmehr wird über ein Steuerprogramm die Antriebsvorrichtung 52 dieses Abstapelwagens 20 angesteuert, der nunmehr kontinuierlich in der Förderebene a-a über die einzelnen Stapelstationen I VII hinwegfährt. Die Abstapelvorrichtung 26 derjenigen Stapelstation, in welche das vom Abstapelwagen 20 aufgenommene Einzelformat abgestapelt werden soll, wird entsprechend dem Arbeitsprogramm vor Eintreffen des Abstapelwagens 20 in ihre Abstreifstellung nach oben gesteuert (s. Fig. 3), wobei das Einzelformat gegen deren Abstreifkamm 26' anläuft und aufgrund des weiterlaufenden Abstapelwagens 20 von diesem abgestreift und auf den Hubtisch 14 abgelegt wird.

Nach Einfahren des entleerten Abstapelwagens 20 in die Hubstation 22 tritt diese in Funktion, fördert den Abstapelwagen 20 in die Rücklaufebene b-b, wonach dessen Antriebsvorrichtung 52 umgesteuert, der Abstapelwagen 20 somit in Richtung auf die Hubstation 24 zubewegt, in dieser wieder in die Förderebene a-a abgesenkt und anschliessend durch erneute Umsteuerung der Antriebsvorrichtung 52 in die Eingabestation transportiert und dort zur Übernahme eines weiteren Einzelformates bereitgestellt wird.

Nachdem vorzugsweise für sämtliche Stationen ein Abstapelwagen 20 vorgesehen ist, lassen sich Einzelformate oder Paketstapel kontinuierlich in der Eingabestation 10 einem Abstapelwagen 20 übergeben, wobei, entsprechend der Abfolge des Sägeprogramms der Plattenaufteilanlage, zum Einlagern der Einzelformate bzw. Paketstapel die Abstapelvorrichtungen 26 der verschiedenen Stapelstationen I - VII programmkonform angesteuert werden.

Wie aus Fig. 1 ersichtlich ist, sind die Hubtische 14 der Eingabestation 10 sowie der beiden folgenden Stapelstationen I und II grösser als die Hubtische 14 der übrigen Stapelstationen III - VII ausgebildet, so dass sie über die Vorderseite der Einrichtung hinausragen. Dies ist deshalb vorgesehen, damit in diesen beiden Stapelstationen I und II Einzelformate besonders grosser Länge günstig abstapelbar sind.

Darüber hinaus ist es ohne weiteres möglich, gleichzeitig auch zwei oder ggf. drei Einzelformate bzw. Paketstapel einem Abstapelwagen 20 zuzuführen, sofern diese lediglich eine entsprechend geringe Abmessung senkrecht zur Förderrichtung aufweisen.

## Patentansprüche

1. Einrichtung zum Abstapeln von aus aufgeteilten, plattenförmigen Einzelwerkstücken oder Plattenpaketen hergestellten Einzelformaten, mit einer Vielzahl von in einer Reihe hintereinanderliegenden Stapelstationen (I, II, .., VII), einer oberhalb der Stapelstationen (I, II, .., VII) angeordneten Transportvorrichtung (18), die einen in Richtung der Stationenreihe verfahrbaren, wenigstens ein Einzelformat aufnehmenden Abstapelwagen (20) aufweist, und mit einer programmgesteuerten Abstapelvorrichtung (26), mit deren Hilfe dem Abstapelwagen (20) übergebene Einzelformate entsprechend einem Abstapelprogramm in ausgewählten Stapelstationen (I, II, .., VII) ablegbar sind,
**dadurch gekennzeichnet,**
dass die Transportvorrichtung (18) mindestens zwei entlang einer endlosen Führungsbahn geführte Abstapelwagen (20) aufweist und dass den Abstapelwagen (20) übergebene Einzelformate von gemäss einem Aufteilprogramm aus einer Plattenaufteilanlage anfallenden Aufteilbildern durch die Abstapelvorrichtung (26) in jeweils einer einem der Einzelformate zugeordneten Stapelstation (I, II, .., VII) ablegbar sind.

2. Einrichtung nach Anspruch 1, dadurch gekennzeichnet, dass die Führungsbahn in einer horizontalen Ebene verläuft.

3. Einrichtung nach Anspruch 1, dadurch gekennzeichnet, dass die Führungsbahn in einer vertikalen Ebene liegt.

4. Einrichtung nach Anspruch 3, dadurch gekennzeichnet, dass die Führungsbahn zwei zueinander parallele, horizontale Bahnabschnitte aufweist.

5. Einrichtung nach Anspruch 4, dadurch gekennzeichnet, dass die Abstapelwagen (20), in Transportrichtung gesehen, am Ende des unteren Bahnabschnittes in die Ebene (b-b) des oberen Bahnabschnittes anhebbar und an dessen Ende wieder in die Ebene (a-a) des unteren Bahnabschnittes absenkbar sind.

6. Einrichtung nach einem der vorhergehenden Ansprüche, dadurch gekennzeichnet, dass die Abstapelwagen (20) jeweils eine eigene Antriebsvorrichtung (52) aufweisen.

7. Einrichtung nach einem der vorhergehenden Ansprüche 4 - 6, dadurch gekennzeichnet, dass die horizontalen Abschnitte der Führungsbahn jeweils zwei im Abstand parallel zueinander angeordnete, stationäre Führungsschienen (72, 74) aufweisen, auf welchen die Abstapelwagen (20) mittels Führungsrollen (46, 48) geführt sind, und dass am Anfang und Ende der Reihe von Stapelstationen (I - VII) den Führungsschienen (72 und 74) jeweils ein Paar von Hubschienenstücken (72', 74') von Hubstationen (22 und 24) zugeordnet sind, die zum Anheben bzw. Absenken der Abstapelwagen (20) in jeweils eine fluchtende Position zu den stationären Führungsschienen (72, 74) des oberen und unteren Bahnabschnittes verstellbar sind.

8. Einrichtung nach den Ansprüchen 6 und 7, dadurch gekennzeichnet, dass die Antriebsvorrichtung (52) der Abstapelwagen (20) jeweils eine sich quer zu den Führungsschienen (72, 74) erstreckende, durch einen Elektromotor (54) antreibbare Antriebswelle (56) aufweisen, die vorzugsweise an beiden Wellenenden mit jeweils einer an den Führungsschienen (72, 74) und den Hubschienenstücken (72', 74') angeordneten Zahnstange (76) kämmende Zahnritzel (58, 60) trägt.

9. Einrichtung nach einem der vorhergehenden Ansprüche, dadurch gekennzeichnet, dass die Abstapelwagen (20) einen in Richtung der Reihe von Stapelstationen (I - VII) kontinuierlich verfahrbaren Stapelrechen (34, 34') aufweisen und dass die Abstapelvorrichtung (26) jeder Stapelstation (I - VII) einen Abstreifkamm (26') aufweist, der programmgesteuert in eine in jeweils einen Stapelrechen (34, 34') eingreifende Hubstellung steuerbar ist.

10. Einrichtung nach einem der vorhergehenden Ansprüche, dadurch gekennzeichnet, dass sich die geradlinig verlaufenden Abschnitte der Führungsbahn senkrecht zur Anlieferrichtung von Einzelformaten erstrecken.

11. Einrichtung nach Anspruch 9 oder 9 und 10, dadurch gekennzeichnet, dass der ersten Stapelstation (I) eine Eingabestation (10) vorgeschaltet ist, in die ein Abstapelwagen (20) vor Übernahme eines oder mehrerer Einzelformate einläuft und die einen absenkbaren Rollentisch aufweist, dessen zwischen den Zinken (34) des Stapelrechens (34, 74') vorhandene Rollen zur Übernahme und Positionierung von Einzelformaten oberhalb des Stapelrechens über dessen Rechenzinken (34) vorstehen.

## Claims

1. Installation for stacking single formats made up of divided-up, plate-shaped individual workpieces or packs of plates, with a plurality of stacking stations (I, II, .., VII) arranged one behind the other in a row, with a transporting device (18) arranged above said stacking stations (I, II, .., VII) and comprising an unstacking carriage (20) displaceable in the direction of said row of stations and adapted to receive at least one single format, and with a program-controlled unstacking device (26) with the aid of which single formats transferred to said unstacking carriage (20) are depositable in accordance with an unstacking program in selected stacking stations (I, II, .., VII), characterized in that said transporting device (18) comprises at least two unstacking carriages (20) guided along an endless guide track, and in that single formats from dividing patterns provided in accordance with a dividing-up program by a plate-dividing installation and transferred to said unstacking carriages (20) are depositable by said unstacking device (26) in a respective stacking station (I, II, .., VII) associated with one of said single formats.

2. Installation as defined in claim 1, characterized in that said guide track extends in a horizontal plane.

3. Installation as defined in claim 1, characterized in that said guide track lies in a vertical plane.

4. Installation as defined in claim 3, characterized in that said guide track comprises two horizontal track sections extending parallel to one another.

5. Installation as defined in claim 4, characterized in that said unstacking carriages (20), seen in the transporting direction, are raisable at the end of the lower track section into the plane (b-b) of the upper track section and are lowerable again at the end of the latter into the plane (a-a) of the lower track section.

6. Installation as defined in one of the preceding claims, characterized in that said unstacking carriages (20) respectively comprise a drive device (52) of their own.

7. Installation as defined in one of the preceding claims 4 to 6, characterized in that the horizontal sections of said guide track respectively comprise two stationary guide rails (72, 74) arranged in spaced, parallel relation to one another, with said unstacking carriages (20) guided thereon by means of guide rollers (46, 48), and in that there is associated with said guide rails (72 and 74) at the start and at the end of said row of stacking stations (I - VII) a pair of lifting rail pieces (72', 74') of lifting stations (22 and 24) which are respectively adjustable to a position in alignment with said stationary guide rails (72, 74) of said upper and said lower track section in order to respectively raise and lower said unstacking carriages (20).

8. Installation as defined in claims 6 and 7, characterized in that said drive devices (52) of said unstacking carriages (20) respectively comprise a drive shaft (56) extending transversely to said guide rails (72, 74) and driveable by an electric motor (54) and preferably carrying at both shaft ends pinions (58, 60) which respectively mesh with a rack (76) arranged at said guide rails (72, 74) and said lifting rail pieces (72', 74').

9. Installation as defined in one of the preceding claims, characterized in that said unstacking carriages (20) comprise a stacking rake (34, 34') which is continuously displaceable in the direction of said row of stacking stations (I - VII), and in that said unstacking device (26) of each stacking station (I - VII) comprises a strip-off comb (26') which is driveable in a program-controlled manner into a raised position for respective engagement with a stacking rake (34, 34').

10. Installation as defined in one of the preceding claims, characterized in that said sections of said guide track which extend in a straight line run perpendicular to the direction in which said single formats are delivered.

11. Installation as defined in claim 9 or 9 and 10, characterized in that said first stacking station (I) is preceded by an intake station (10) which an unstacking carriage (20) enters before taking over one or several single formats'and which comprises a lowerable roller table, the rollers of which are provided between the prongs (34) of said stacking rake (34, 74') and protrude above said stacking rake over its rake prongs (34) to take over and position single formats.

## Revendications

1. Dispositif pour l'empilage de formats individuels réalisés dans des pièces individuelles en forme de plaques délignées ou de paquets de plaques, comportant une pluralité de postes d'empilage (I, II, ..., VII) placés en série les uns par rapport aux autres, un dispositif transporteur (18) dispose au-dessus desdits postes d'empilage (I, II,..., VII) lequel présente un chariot de transport (20) mobile dans la direction de la rangée des postes d'empilage et recevant au moins un format individuel, comprenant également un dispositif d'empilage (26) à commande programmée, à l'aide duquel des formats individuels transférés au moyen du chariot (20) peuvent être déposés dans des postes d'empilage sélectionnés (I, II, ..., VII) en fonction d'un programme d'empilage, caractérisé en ce que le dispositif transporteur (18) présente au moins deux chariots (20) guidés le long d'un rail de guidage sans fin et, en ce que les formats individuels transférés auxdits chariots (20) peuvent être déposés dans respectivement l'un des postes d'empilage (I, II, ..., VII) attribué à l'un de ces formats individuels, au moyen dudit dispositif d'empilage (26), selon un programme de répartition réalisé sur la base des images provenant d'une installation de délignage des plaques.

2. Dispositif selon la revendication 1, caractérisé en ce que le rail de guidage s'étend dans un plan horizontal.

3. Dispositif selon la revendication 1, caractérisé en ce que le rail de guidage se situe dans un plan vertical.

4. Dispositif selon la revendication 3, caractérisé en ce que le rail de guidage présente deux sections de rail horizontales parallèles entre elles.

5. Dispositif selon la revendication 4, caractérisé en ce que les chariots (20), vus dans la direction du transport, peuvent être soulevés à l'extrémité de la section inférieure du rail, dans le plan (b-b) de la section supérieure de ce rail et peuvent être à nouveau abaissés sur son extrémité dans le plan (a-a) de la section inférieure du rail.

6. Dispositif selon l'une des revendications précédentes, carctérisé en ce que les chariots (20) ont chacun leur propre moteur (52).

7. Dispositif selon l'une des revendications 4 à 6, caractérisé en ce que les sections horizontales de la voie de guidage représentent chacune des rails fixes (72, 74), parallèles et placés à une certaine distance l'un par rapport à l'autre, sur lesquels sont guidés les chariots (20) au moyen de galets de guidage (46, 48), et en ce qu'au début et à la fin de la rangée de postes d'empilage (I à VII), à chacun des rails de guidage (72 et 74) est associée une paire d'organes de levage des rails (72', 74') de postes de levage (22 et 24) qui sont réglables, pour lever ou abaisser les chariots (20), dans une position alignée par rapport aux rails fixes (72, -74) de la section supérieure et inférieure de la voie de guidage.

8. Dispositif selon les revendications 6 et 7, caractérisé en ce que le dispositif d'entrainement (52) de chacun des chariots (20) présente respectivement un arbre d'entrainement (56) s'étendant transversalement aux rails de guidage (72, 74) et pouvant être entraîné par un moteur électrique (54), ledit arbre (56) présentant, de préférence, à chacune de ses deux extrémités, un pignon (58, 60) s'engrénant dans une crémaillère (76) disposée sur les rails de guidage (72, 74) et sur les éléments de levage (72', 74') de ces rails.

9. Dispositif selon l'une des revendications précédentes, caractérisé en ce que les chariots (20) présentent un râteau d'empilage (34, 34') mobile en continu dans la direction de la rangée des postes d'empilage (I à VII), et en ce que le dispositif d'empilage (26) de chaque poste (I à VII) présente un peigne racleur (26') qui peut être amené en prise avec respectivement un râteau (34, 34') sous l'effet d'une commande programmée.

10. Dispositif selon l'une des revendications précédentes, caractérisé en ce que les sections s'étendant en ligne droite par rapport' à la voie de guidage s'étendent perpendiculairement à la direction d'arrivée des formats individuels.

11. Dispositif selon les revendications 9 et 10, caractérisé en ce que, en amont du premier poste d'empilage (I) est monté un poste d'introduction (10) dans lequel pénètre un chariot (20) avant le transfert d'un ou de plusieurs formats individuels, ce poste d'introduction (10) comprenant une table sur rouleaux pouvant être abaissée,dont les rouleaux se trouvant entre les pointes (34) du râteau (34, 34') se projettent au-dessus de ce râteau au-delà de ses pointes (34), pour le transfert et le positionnement de formats individuels.
